# EUROPÄISCHE PATENTANMELDUNG

(11) **EP 0 839 461 A1**
(43) Veröffentlichungstag der Anmeldung: **06.05.1998**
(21) Anmeldenummer: 96203038.3
(22) Anmeldetag: 31.10.1996
(51) Int. Cl.: A23L 3/22, A23C 3/037, B01F 5/04

(54) **Verfahren und Vorrichtung zum Erhitzen, Pasteurisieren und Sterilisieren von Flüssigkeiten**

(71) Anmelder: SOCIETE DES PRODUITS NESTLE S.A., 1800 Vevey (CH)
(72) Erfinder: Schmied, Christian, 3510 Ursellen (CH)
(74) Vertreter: Thomas, Alain

(57) **Zusammenfassung**

Die Erfindung betrifft eine Vorrichtung , bestehend aus einer Leitung (1) zum Eintritt der Flüssigkeit, einem Dampfeintritt (9) und einem geschlossenen Gehäuse (4), das einen Teil der Leitung beinhaltet , wobei dieser Teil der Leitung durch ein Rohr (6) mit verschiedenen Bohrungen (7) gebildet ist und die genannte Vorrichtung zusätzlich einen Regulierschieber zwischen dem Gehäuse und der Aussenwand des Rohres aufweist, wobei das Rohr, das Gehäuse und der Regulierschieber gleichachsig sind und der Dampfeintritt von dem Gehäuse und in der Nähe der Bohrungen des Rohres einmündet.

## Beschreibung

Die Erfindung betrifft ein Verfahren zum Erhitzen, Pasteurisieren oder Sterilisieren von Flüssigkeiten durch direktes Zusammenführen mit Wasserdampf . Die Erfindung betrifft weiter die Vorrichtung zur Durchführung des Verfahrens.

Es ist schon bekannt, ein Pasteurisieren oder Sterilisieren von Milch durch direktes Zusammenführen mit Wasserdampf durchzuführen. Die DE-AS 1164024 betrifft ein solches Verfahren. Der Nachteil dieses Verfahrens ist, dass im Mischbereich der Milch und des Dampfes hohe Scherkräfte entstehen, wobei ein Erhitzen eines stückigen Produktes unmöglich ist, weil die Stücke sehr stark beansprucht würden. In diesem Dampfinjektor haben die Leitungen enge Durchlässe, wodurch hohen Beschleunigungen entstehen, was eine solche Vorrichtung zusätzlich für stückige Produkte ungeeignet macht.

Der Erfindung liegt die Aufgabe zugrunde, ein Verfahren zu haben, in dem es möglich ist, alle Typen von Flüssigkeiten zu erhitzen mit einer grossen Flexibilität, was die Temperatur des Erhitzens und die Beschaffenheit des Produktes betrifft.

Die Erfindung betrifft ein Verfahren zum Erhitzen, Pasteurisieren oder Sterilisieren von Flüssigkeiten durch direktes Zusammenführen mit Wasserdampf , wobei der Wasserdampf in kleinen Strahlen vom Radius gegen das Zentrum des Flüssigkeitsstromes eingespritzt wird und die Zahl dieser Strahlen variierbar ist.

Die Einspritzung des Dampfes in der Form kleine Strahlen erlaubt eine sehr gute Dampfverteilung in der Flüssigkeit, was zur regelmässigen Temperaturverteilung und kurzer Kondensationszeit führt. Die Variierbarkeit der Zahl der Strahlen erlaubt eine gute Flexibilität des Verfahrens, was die Temperatur der erzielten Flüssigkeit betrifft.

Die Zahl der Strahlen ist nicht kritisch. Vorzugsweise liegt sie zwischen 10 und 500. Mit einem solchen Bereich kann man eine Temperaturdifferenz von 10 bis 120°C erreichen. Man kann deswegen sowohl ein Erhitzen, als ein Pasteurisieren oder ein Sterilisieren einer Flüssigkeit in Betracht ziehen.

Die Strahlen des Dampfes sind kritisch was ihrer Anordnung betrifft. Die Anordnung der Strahlen erstreckt sich spiralförmig gegenüber der Achse des Flüssigkeitsstromes.

Die Flüssigkeit , die man erfindungsgemäss behandeln kann, ist absolut nicht kritisch. Man kann sowohl Flüssigkeit mit Stücken und ohne Stücke erhitzen. Es gibt auch keine Beschränkungen was die Viskosität der Flüssigkeit betrifft. Produkte mit hohen Viskositäten lassen sich ebenso erhitzen wie reine niederviskosen Flüssigkeiten. Die Flüssigkeit ist zum Beispiel aus der Gruppe Milch, Saucen, Saucen mit Stücken, Cerealienbrei gewählt.

Die Anzahl und Grösse der Strahlen kann der einzuspritzenden Dampfmenge angepasst werden : Je grösser die Dampfmenge, desto grösser die Strahlen.

Ebenfalls hat man keine Kritikalität, was den Wasserdampf betrifft. Man kann sich an eine herkömmliche Wasserdampfzufuhr anschliessen. Erfindungsgemäss arbeitet man vorzugsweise mit Wasserdampf auf einer Temperatur zwischen 150 und 180 °C und bei einem Druck zwischen 5 und 10 bar.

Die Flüssigkeitsgeschwindigkeit kann, ohne Nachteile auf die Funktion, sehr tief und sehr hoch sein.

Die Erfindung betrifft weiter eine Vorrichtung zur Durchführung des obenerwähnten Verfahrens, bestehend aus einer Leitung zum Eintritt der Flüssigkeit, einem Dampfeintritt und einem geschlossenen Gehäuse, das einen Teil der Leitung beinhaltet , wobei dieser Teil der Leitung durch ein Rohr mit verschiedenen Bohrungen gebildet ist und sie zusätzlich einen Regulierschieber zwischen dem Gehäuse und der Aussenwand des Rohres aufweist, wobei das Rohr, das Gehäuse und der Regulierschieber gleichachsig sind und der Dampfeintritt von dem Gehäuse und in der Nähe der Bohrungen des Rohres einmündet.

Mit dieser Vorrichtung fliesst die Flüssigkeit ohne Hindernisse durch das Rohr und es entsteht praktisch kein Druckverlust.

Der Regulierschieber erlaubt die Oeffnung bzw. Schliessung der Bohrungen. Die Vorrichtung läuft sehr geräuscharm, ohne Vibration oder Kavitation und es wird eine regelmässige Temperaturverteilung und schnelle Dampfkondensation auch in viskosem Produkt erzielt.

Im Falle einer Behandlung einer Flüssigkeit mit Stücken, werden diese Stücke schonend erwärmt. Es entsteht kein Druckverlust auf der Produktseite. Die erfindungsgemässe Vorrichtung ist praktisch viskositäts- und leistungsunabhängig.

Das Rohr in der Vorrichtung weist zwischen 10 und 500 Bohrungen auf. Der Durchmesser dieser Bohrungen ist abhängig vom Durchmesser der Leitung zum Eintritt der Flüssigkeit: Der Durchmesser der Bohrungen liegt normalerweise zwischen 0,5 und 4 mm. Eine totale Oeffnung der Bohrungen erlaubt eine Erhitzung einer Flüssigkeit auf ca. 170 °C, entsprechend dem maximal zur Verfügung stehenden Dampfdruck.

Die Bohrungen sind nicht willkürlich verteilt : Sie sind, von der Innenwand des Rohres gesehen, spiralförmig angeordnet. Der Winkel der Schraubenlinie kann beliebig und je nach Anzahl Löcher und Gesamthöhe gewählt werden.

Das Rohr weist keine metallischen Flächen auf: Man verhindert das Risiko, Anbrennungen von Produkt auf diesen Flächen zu bekommen. Das Rohr ist aus einem schlecht leitenden Material gefertigt, wie. z. B. Polytetrafluorethylen, Keramik , Kohlefaser oder Kohlefaser/Epoxy.

Eine kontinuierliche Anpassung der freien Düsenbohrungen ist möglich mit einem Motorantrieb, der die Schliessung bzw. die Oeffnung des Regulierschiebers betätigt. Die Vorrichtung umfasst in diesem Fall eine Steuerung, die einen Fühler beim Austritt der Flüssigkeit beinhaltet, der eine Ist-Wert-Temperatur misst und ein Signal ausstrahlt, und wenn eine Temperaturabweichung gegenüber dem Soll-Wert entsteht, dass die Steuerung entsprechend dem Motor ein weiteres Signal zur Betätigung des Regulierschiebers ausstrahlt.

Die Vorrichtung wird näher beschrieben in Verbindung mit den Zeichnungen, wobei
Fig. 1 eine schematische Darstellung der erfindungsgemässen Vorrichtung mit Teilschnitt zeigt und

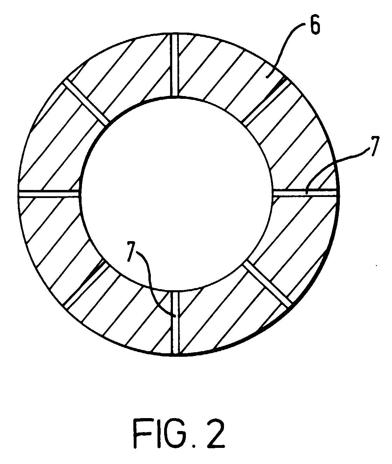

Fig. 2 einen Schnitt längs Linie A-A der Figur 1 zeigt mit nur dem Rohr.

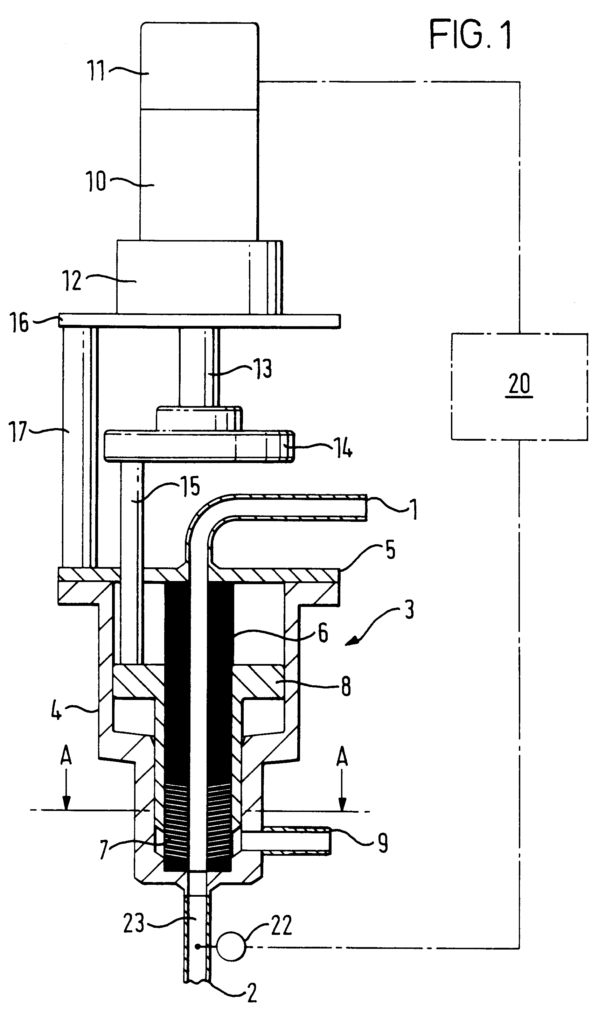

Die Figur 1 zeigt für die Flüssigkeit ein Eintrittsrohr (1) und ein Austrittsrohr (2) und dazwischen die erfindungsgemässe Vorrichtung (3).

Diese Vorrichtung besteht aus folgenden Teilen :
- einem Gehäuse (4) mit einem Deckel (5),
- einem Rohr (6) mit Bohrungen (7),
- einem Regulierschieber (8) und
- einem Dampfeintritt (9).

Der Regulierschieber (8) ist bewegbar mit der Hilfe eines Motors mit Getriebe (10), der einen elektrischen Anschluss (11) und Kupplung (12) aufweist. Die Spindel (13) bewegt den Flansch (14), der in Verbindung mit den Führungsstangen (15) den Regulierschieber (8) nach oben oder nach unten bewegt.

Ein fester Lagerflansch (16) mit den Distanzstangen (17) definiert die Hublänge des Flansches (14). Wenn man diese Hublänge variieren möchte, kann man entsprechend die Länge der Distanzstangen vergrössern oder verkürzen.

Die Vorrichtung funktioniert folgendermassen :
Die Flüssigkeit kommt gemäss Achse (23) durch die Leitung (1) in die Vorrichtung (3). Der Dampf tritt durch die Leitung (9) in die Vorrichtung ein . Der Regulierschieber steht auf einer bestimmten Höhe und lässt eine gewisse Zahl von Bohrungen (7) im Rohr (6) offen. Abhängig von der gewünschten Endtemperatur der Flüssigkeit, kann man über die Dampftemperatur, über den Dampfdruck und über die Zahl der offenen Bohrungen operieren. Das Rohr (6) der Figur weist 150 Bohrungen auf mit einem Durchmesser von 1 mm.

Man kann manuell die Höhe des Regulierschiebers beinflussen, indem man den Motor (10) in Betrieb setzt, wenn eine bestimmte Aenderung in der Endtemperatur des Produktes gewünscht wird.

Es ist auch möglich, eine automatische Kontrolle zu haben. In diesem Fall ist ein Fühler (22) auf der Austrittslinie (2) der Flüssigkeit plaziert. Der Fühler misst eine Ist-Wert-Temperatur und strahlt ein Signal aus. Wenn dieser Ist-Wert von der Soll-Wert-Temperatur abweicht, strahlt die Steuerung (20) auf den Motor (10) ein weiteres Signal aus zur Betätigung des Regulierschiebers (8).

Wie schon oben erwähnt, ist es erfindungsgemäss vorteilhaft, eine Vorrichtung zur Verfügung zu haben , welche eine Erhitzung von Flüssigkeiten mit Stücken erlaubt. Ein weiterer Vorteil ist dass man kein Dampfregulierventil mehr braucht. Die Dampfregulation und die Dampfinjektion geschehen zusammen dank der Variierbarkeit der Zahl der offenen Bohrungen. Die erfindungsgemässe Vorrichtung kann zum gleichen oder günstigeren Preis hergestellt werden als traditionelle Injektoren mit einem zusätzlichen Dampfregulierventil.

## Patentansprüche

1. Verfahren zum Erhitzen, Pasteurisieren oder Sterilisieren von Flüssigkeiten durch direktes Zusammenführen mit Wasserdampf , dadurch gekennzeichnet, dass der Wasserdampf in kleinen Strahlen vom Radius gegen das Zentrum des Flüssigkeitsstromes eingespritzt wird und dass die Zahl dieser Strahlen variierbar ist.

2. Verfahren gemäss Anspruch 1, dadurch gekennzeichnet, dass die Zahl der Strahlen zwischen 10 und 500 variierbar ist.

3. Verfahren gemäss Anspruch 1 oder 2, dadurch gekennzeichnet, dass die Anordnung der Strahlen sich spiralförmig gegenüber der Achse des Flüssigkeitsstromes erstreckt.

4. Verfahren gemäss Ansprüche 1 bis 3, dadurch gekennzeichnet, dass der Wasserdampf von einer Temperatur zwischen 150 und 180 °C und bei einem Druck zwischen 5 und 10 bar zugeführt wird.

5. Verfahren gemäss Ansprüche 1 bis 4, dadurch gekennzeichnet, dass die Flüssigkeit aus der Gruppe Milch, Saucen, Saucen mit Stücken, Cerealienbrei gewählt wird.

6. Vorrichtung zur Durchführung des Verfahrens gemäss Ansprüche 1 bis 5, bestehend aus einer Leitung zum Eintritt der Flüssigkeit, einem Dampfeintritt und einem geschlossenen Gehäuse, das einen Teil der Leitung beinhaltet , dadurch gekennzeichnet, dass dieser Teil der Leitung durch ein Rohr mit verschiedenen Bohrungen gebildet ist und dass sie zusätzlich einen Regulierschieber zwischen dem Gehäuse und der Aussenwand des Rohres aufweist, wobei das Rohr, das Gehäuse und der Regulierschieber gleichachsig sind und der Dampfeintritt von dem Gehäuse und in der Nähe der Bohrungen des Rohres einmündet.

7. Vorrichtung gemäss Anspruch 6, dadurch gekennzeichet, dass der Regulierschieber die Oeffnung bzw. Schliessung der Bohrungen erlaubt.

8. Vorrichtung gemäss Ansprüche 6 oder 7, dadurch gekennzeichnet, dass das Rohr zwischen 10 und 500 Bohrungen aufweist.

9. Vorrichtung gemäss Ansprüche 6 bis 8, dadurch gekennzeichnet, dass das Rohr aus einem Wärme schlecht leitenden Material gefertigt ist.

10. Vorrichtung gemäss Ansprüche 6 bis 9, dadurch gekennzeichnet, dass die Bohrungen in der Innenwand des Rohres spiralförmig angeordnet sind.

11. Vorrichtung gemäss Ansprüche 6 bis 10, dadurch gekennzeichnet, dass sie einen Motor zur Schliessung bzw. Oeffnung des Regulierschiebers aufweist.

12. Vorrichtung gemäss Ansprüche 6 bis 11, dadurch gekennzeichnet, dass sie eine Steuerung umfasst, die einen Fühler beim Austritt der Flüssigkeit beinhaltet, der eine Ist-Wert-Temperatur misst und ein Signal ausstrahlt, und wenn eine Temperaturabweichung gegenüber dem Soll-Wert entsteht, dass die Steuerung auf den Motor ein weiteres Signal zur Betätigung des Regulierschiebers ausstrahlt.
